# EUROPÄISCHE PATENTSCHRIFT

(11) **EP 2 323 871 B1**
(45) Veröffentlichungstag und Bekanntmachung des Hinweises auf die Patenterteilung: **13.02.2013**
(21) Anmeldenummer: 09778027.4
(22) Anmeldetag: 18.08.2009
(51) Int. Cl.: B60R 21/205, F16B 37/02

(54) **AIRBAGANORDNUNG**
AIRBAG SYSTEM
SYSTÈME D'AIRBAG

(30) Priorität: 19.08.2008 DE 102008039180
(43) Veröffentlichungstag der Anmeldung: 25.05.2011
(73) Patentinhaber: Faurecia Innenraum Systeme GmbH, 76767 Hagenbach (DE); A. Raymond et Cie., 38000 Grenoble (FR)
(72) Erfinder: STÄBLER, Denis, 31224 Peine (DE); HOLTORP, Rainer, 36205 Sontra (DE); BACHMANN, Andreas, 31234 Edemissen (DE); PÜTZ, Tobias, 38527 Meine (DE); KETELSEN, Frank, 29358 Eicklingen (DE); SCHMEDES, Stefan, 27711 Heilshorn (DE)
(74) Vertreter: Pfenning, Meinig & Partner GbR
(86) Internationale Anmeldenummer: PCT/EP2009/006072
(87) Internationale Veröffentlichungsnummer: WO 2010/020420

(56) Entgegenhaltungen:
- EP-A1- 1 354 773
- DE-A1- 19 505 307
- FR-A1- 2 523 663
- US-A- 5 904 367
- US-A1- 2006 220 355

## Beschreibung

Die Erfindung betrifft eine Airbaganordnung mit einem Verstärkungsteil für eine Schraubverbindung zum Befestigen eines Airbagmöduls an einem flächigen Träger.

Verstärkungsteile, mit denen eine durch eine Schraube vermittelte Haltekraft in einen Träger einleitbar ist und die einstückig aus einem Blech geformt sind, sind an sich bekannt. Eine besonders einfache Realisierung derartiger Verstärkungsteile bilden Unterlegscheiben. Je nachdem, was für Gegenstände mit Hilfe eines derartigen Verstärkungsteils an einem Träger befestigt werden sollen, können solche Verstärkungsteile auch komplexere Formen zeigen.

Die Druckschrift DE 103 04 197 A1 beschreibt eine Airbaganordnung, bei der ein Airbagmodul mit Hilfe eines vergleichbaren Verstärkungsteils an einem Träger eines Innenverkleidungsteils für Kraftfahrzeuge befestigt ist. Die Verstärkungsteile werden dort als Metallbrücken bezeichnet und sind als Blechstreifen ausgeführt, die auf einer Oberseite eines Kunststoffträgers des Innenverkleidungsteils ruhen und die jeweils zwei Gewindebolzen halten, auf die wiederum an einer Rückseite des Innenverkleidungsteils jeweils eine Mutter aufgeschraubt ist, um das Airbagmodul zu halten. Bei der dort vorgeschlagenen Airbaganordnung sind also verhältnismäßig viele Bauteile erforderlich, um das Airbagmodul an dem Innenverkleidungsteil zu befestigen, nämlich zusätzlich zu den Verstärkungsteilen die genannten Gewindebolzen und die darauf aufgeschraubten Muttern. Das Befestigen des Airbagmoduls an den Kunststoffträger des Innenverkleidungsteils ist bei dem Stand der Technik aus der Druckschrift DE 103 04 197 A1 folglich mit einem nachteilig großen Aufwand verbunden.

Die Druckschrift US 2006/0220355 A1 zeigt eine ähnliche Airbaganordnung, bei der ein Airbagmodul mit Hilfe von Verstärkungsteilen an einer Airbagabdeckung festgeschraubt ist, wobei die sich am Träger abstützenden Verstärkungsteile in diesem Fall selbst mit Gewinden versehen sind.

Der vorliegenden Erfindung liegt die Aufgabe zugrunde, eine Airbaganordnung mit einem vergleichbaren Verstärkungsteil für eine Schraubverbindung zum Befestigen eines Airbagmoduls an einem flächigen Träger einer Airbagabdeckung vorzuschlagen, wobei das Verstärkungsteil einerseits selbst mit geringem Aufwand herstellbar sein und andererseits eine Realisierung der Schraubverbindung mit vergleichsweise geringem Aufwand und insbesondere einer möglichst geringen Anzahl von Teilen möglich machen soll.

Diese Aufgabe wird erfindungsgemäß gelöst durch eine Airbaganordnung mit den Merkmalen des Hauptanspruchs. Vorteilhafte Ausgestaltungen und Weiterentwicklungen der Erfindung ergeben sich mit den Merkmalen der Unteransprüche.

Eine erfindungsgemäße Airbaganordnung umfasst demnach einen Träger einer Airbagabdeckung und ein an einer Rückseite des Trägers angeordnetes Airbagmodul, das an mindestens einer Stelle mittels einer Schraubverbindung an dem Träger befestigt ist, sowie ein einstückig aus einem Blech geformtes, von der Schraubverbindung umfasstes Verstärkungsteil, das mindestens einen mit einem Innengewinde versehenen Durchzug zum Einschrauben einer Schraube der Schraubverbindung aufweist und mit dem eine durch die Schraube vermittelte Haltekraft in den Träger einleitbar ist, wobei sich das Verstärkungsteil an einer Vorderseite des Trägers abstützt und wobei das Airbagmodul durch ein mit dem mindestens einen Durchzug fluchtendes Loch im Träger mit dem Verstärkungsteil verschraubt ist. Dadurch erfüllt das in vorteilhaft einfacher Weise aus einem einzigen Blech geformte Verstärkungsteil mehrere Funktionen. Einerseits dient es zum Einleiten einer durch eine Schraube vermittelten Haltekraft in den Träger, an dem der zu befestigende Gegenstand angebracht werden soll. Darüber hinaus erfüllt es mit dem Innengewinde, das in dem mindestens einen Durchzug vorgesehen ist, die Funktion einer Mutter, so dass die Schraube hier direkt in das Verstärkungsteil eingeschraubt werden kann.

Die Erfindung sieht außerdem vor, dass ein Teil des Verstärkungsteils, der eine durch den mindestens einen Durchzug gebildete Öffnung umgibt, in das mit diesem Durchzug fluchtende Loch des Trägers hineinragt und vorzugsweise durch dieses Loch hindurchragt, also unter Umständen zumindest bis an eine dem Airbagmodul zugewandte Oberfläche des Trägers heranreicht. So kann der genannte Teil des Verstärkungsteils als Abstandhalter fungieren und eine mechanische Überlastung des Trägers durch die Schraubverbindung verhindern, indem das Airbagmodul zumindest stellenweise an dem in das Loch des Trägers hineinragenden Teil des Verstärkungsteils anliegt und sich dort abstützt.

Die Erfindung sieht vor, dass das Verstärkungsteil mindestens einen mit einem Innengewinde versehenen Durchzug zum Einschrauben einer Schraube der Schraubverbindung aufweist, wobei das Blech, aus dem das Verstärkungsteil einstückig geformt ist, in einer Umgebung des mindestens einen Durchzugs so in eine dem Durchzug abgewandte Richtung umgebogen ist, dass mindestens ein umgebogener Randbereich des Blechs eine durch den Durchzug gebildete Öffnung an einer dem Durchzug abgewandten Seite des Verstärkungsteils zumindest teilweise einfasst. Dadurch erfüllt das sehr einfach gestaltete und aus einem einzigen Blech geformte Verstärkungsteil eine weitere vorteilhafte Funktion. Wenn das Blech in einer Umgebung des mindestens einen Durchzugs in beschriebener Weise in die dem Durchzug abgewandte Richtung umgebogen ist, kann das Verstärkungsteil nämlich ferner als Abstandhalter fungieren, indem der mindestens eine den Durchzug zumindest teilweise einfassende Randbereich des Blechs in ein von der Schraube durchdrungenes Loch im Träger eingeführt werden kann und dabei eine durch dieses Loch durchstoßene Wand des Trägers so überbrücken kann, dass ein Gegenlager der Schraube durch den mindestens einen Randbereich des Verstärkungsteils auf Abstand gehalten wird, was die Wand des Trägers in vorteilhafter Weise entlasten kann. Der mindestens eine umgebogene Randbereich bildet dann den weiter oben genannten Teil des Verstärkungsteils, der eine durch den mindestens einen Durchzug gebildete Öffnung gibt und in das mit diesem Durchzug fluchtende Loch des Trägers hineinragt. Zusätzlich kann der mindestens eine umgebogene Randbereich des Verstärkungsteils, zusammenwirkend mit Löchern im Träger, an dem der jeweilige Gegenstand zu befestigen ist, einer vorteilhaft einfachen Positionierung des Verstärkungsteils und damit der Schraubverbindung dienen.

Damit der mindestens eine Randbereich die beschriebenen Funktionen als Abstandhalter und Positionierhilfe erfüllen kann, ist es vorteilhaft, wenn er um 90° oder 180° aus einer zum Durchzug, insbesondere zur Achse des Durchzugs, senkrechten Ebene herausgebogen sind.

Eine besonders einfache und anwendungsspezifisch optimierte Gestaltung des mindestens einen Randbereichs wird möglich, wenn der mindestens eine Randbereich einen Blechstreifen und einen an dem Blechstreifen ansetzenden und den Blechstreifen mit einem verbleibenden Teil des Blechs verbindenden umgebogenen Steg umfasst.

Dabei kann der Blechstreifen insbesondere so umgebogen sein, dass er die durch den entsprechenden Durchzug gebildete Öffnung zumindest teilweise umfasst. Der in vorteilhaft einfacher Weise geformte Blechstreifen kann dann, vorteilhafterweise zusammenwirkend mit einem weiteren Blechstreifen eines anderen, dem gleichen Durchzug zugeordneten Randbereichs, die Funktion einer Buchse erfüllen. Eine bevorzugte Ausführungsform sieht vor, dass der Blechstreifen dabei zwei Enden aufweist, die mit dem Steg eine T-Form bilden. Dann können beide Enden so umgebogen sein, dass sie die durch den entsprechenden Durchzug gebildete Öffnung zumindest teilweise umfassen, um so die Funktion einer Buchse zu übernehmen. Typischerweise werden dem Durchzug oder jedem der in beschriebener Weise gestalteten Durchzüge des Verstärkungsteils jeweils zwei der durch einen Blechstreifen und einen daran ansetzenden Steg gebildeten Randbereiche zugeordnet sein, wobei die Stege dieser zwei Randbereiche an zwei gegenüberliegenden Seiten des entsprechenden Durchzugs am verbleibenden Teil des Blechs ansetzen. So kann erreicht werden, dass die durch den Durchzug gebildete Öffnung vollständig oder fast vollständig von den umgebogenen Randbereichen umfasst wird, was im Hinblick auf die von den Randbereichen zu erfüllenden Funktionen von Vorteil ist.

In einer alternativen Ausführungsform ist der Randbereich derart gestaltet, dass dieser eine Aussparung aufweist, wobei die Aussparung beispielsweise ein Halbkreis oder auch ein Loch im Randbereich ist. Die Aussparung umfasst, je nach Ausführung, den Durchzug zumindest teilweise, im Falle eines Lochs vollständig. Dabei wird typischerweise ein, vorzugsweise zwei, Endbereich(e) des Blechstreifens aus einer zur Aussparung parallelen Ebene um 90° herausgebogen. Die Endbereiche liegen dabei an einem, vorzugsweise zwei gegenüberliegenden Seiten des entsprechenden Durchzugs am verbleibenden Teil des Blechs an. Hierdurch wir die Funktion des Abstandshalters erfüllt. Wird lediglich ein Randbereich vorgesehen, ist dieser vorteilhafterweise mit einem Loch versehen und um 180° umgebogen. Beim Vorhandensein von zwei sich gegenüberliegenden Randbereichen kann jeder dieser Randbereiche eine halbkreisförmige Aussparung aufweisen, welche gegenüberliegend um 180° aufgebogen den Durchzug nahezu vollständig umfassen.

Bei typischen Ausführungen der Erfindung ist das Verstärkungsteil aus einem Streifen gebildet, wobei der mindestens eine umgebogene Randbereich an einem Rand des Streifens auf Höhe des entsprechenden Durchzugs ansetzen kann. Es kann vorgesehen sein, dass das Verstärkungsteil dann in einem Verlauf des Streifens mindestens zwei mit Innengewinde versehene und in beschriebener Weise von jeweils mindestens einem umgebogenen Randbereich umgebene Durchzüge aufweist. Dann kann das einzelne Verstärkungsteil einer Schraubverbindung mit mindestens zwei Befestigungspunkten dienen, die eine auch gegen Verdrehen sichere Befestigung erlaubt. Zusätzlich kann das Verstärkungsteil auch einen oder mehrere weitere Durchzüge mit oder ohne Innengewinde aufweisen, die zum Realisieren zusätzlicher Befestigungspunkte und/oder einer genaueren Positionierung des Verstärkungsteils dienen können.

Zusätzlich zu den beschriebenen Durchzügen und dem jeweils mindestens einen umgebogenen Randbereich kann das Verstärkungsteil auch weitere Biegungen aufweisen, um einer Form des Trägers folgen zu können, an dem mit der das Verstärkungsteil umfassenden Schraubverbindung ein Gegenstand befestigt werden soll.

Ein vorteilhaft einfacher Aufbau einer Airbaganordnung ergibt sich, wenn ein Airbagmodul mit Hilfe eines Verstärkungsteils oder mehrerer Verstärkungsteile beschriebener Art an einem Träger einer Airbagabdeckung befestigt wird. Eine solche vorteilhafter Airbaganordnung umfasst also einen Träger einer Airbagabdeckung, ein an einer Rückseite des Trägers angeordnetes Airbagmodul, das an mindestens einer Stelle mittels einer Schraubverbindung an dem Träger befestigt ist, sowie ein von der Schraubverbindung umfasstes Verstärkungsteil zuvor beschriebener Art. Dabei stützt sich das Verstärkungsteil an einer Vorderseite des Trägers ab, wobei das Airbagmodul durch mindestens ein Loch im Träger mit dem Verstärkungsteil verschraubt ist und wobei vorzugsweise der mindestens eine Randbereich des Blechs oder ein anderer den Durchzug umgebender Teil des Verstärkungsteils in das mindestens eine mit dem Durchzug fluchtende Loch des Trägers hineinragt.

Damit der mindestens eine Randbereich die beschriebene Funktion eines Abstandhalters zur Entlastung des Trägers besonders gut erfüllen kann, kann der mindestens eine Randbereich in vorteilhafter Weise so dimensioniert werden, dass er durch das mindestens eine Loch des Trägers hindurchragt und zumindest an eine dem Airbagmodul zugewandte Oberfläche des Trägers heranreicht. Besonders vorteilhaft ist es, wenn der mindestens eine umgebogene Randbereich des Blechs genau bis an die dem Airbagmodul zugewandte Oberfläche des Trägers heranreicht, um einerseits eine Entlastung des Trägers von einem durch die Schraubverbindung verursachten Druck zu bewirken und andererseits eine möglichst spielfreie Befestigung des Airbagmoduls zu erlauben. Eine besonders stabile Verbindung ergibt sich insbesondere dann, wenn das Airbagmodul oder eine Buchse, die eine in den Durchzug eingeschraubte Schraube führt und in eine Öffnung in einem Teil des Airbags sitzt, zumindest stellenweise an dem mindestens einen umgebogenen Randbereich des Verstärkungsteils anliegt.

In entsprechender Weise können selbstverständlich auch andere Gegenstände mit Hilfe eines Verstärkungsteils beschriebener Art an einem entsprechenden Träger befestigt werden.

Im Allgemeinen umfasst eine solche Anordnung also einen Träger sowie einen an einer Rückseite des Trägers angeordneten Gegenstand, der an mindestens einer Stelle mittels einer Schraubverbindung an dem Träger befestigt ist, wobei die Schraubverbindung ein metallisches Verstärkungsteil umfasst, das sich an einer Vorderseite des Trägers abstützt und mit dem der Gegenstand durch mindestens ein Loch im Träger verschraubt ist, wobei das Verstärkungsteil ferner einstückig aus einem Blech geformt ist und mindestens einen mit einem Innengewinde versehenen Durchzug aufweist, in den eine Schraube der Schraubverbindung eingeschraubt ist, wobei das Blech in einer Umgebung des Durchzugs so umgebogen ist, dass es in einem Randbereich in das mindestens eine mit dem Durchzug fluchtende Loch des Trägers hineinragt. Bei dem so befestigen Gegenstand kann es sich insbesondere um ein Airbagmodul, bei dem Träger insbesondere um den Träger einer Airbagabdeckung handeln.

Ein Ausführungsbeispiel der Erfindung wird nachfolgend anhand der Figuren 1 bis 14 erläutert. Es zeigen
- Fig. 1: einen Querschnitt durch ein Innenverkleidungsteil eines Kraftfahrzeugs, das mit einem dahinter angeordneten Airbagmodul eine Airbaganordnung vorgeschlagener Art bildet,
- Fig. 2: eine Seitenansicht eines Verstärkungsteils, das als Bestandteil einer Schraubverbindung zwischen dem Airbagmodul und dem Innenverkleidungsteil aus Fig. 1 dient,
- Fig. 3: eine Aufsicht auf das Verstärkungsteil aus Fig. 2,
- Fig. 4: einen Querschnitt durch dieses Verstärkungsteil an einer in Fig. 3 mit A-A gekennzeichneten Stelle,
- Fig. 5: eine perspektivische Ansicht des Verstärkungsteils mit weiteren Bestandteilen der genannten Schraubverbindung,
- Fig. 6: eine ähnliche Darstellung des Verstärkungsteils in einer Ansicht aus einer anderen Richtung,
- Fig. 7: eine perspektivische Ansicht einer alternativen Ausführungsformen eines Verstäkungsteils,
- Fig. 8: eine Aufsicht auf ein Verstärkungsteil in einer weiteren Ausführungsform,
- Fig. 9: als Seitenansicht ein viertes Ausführungsbeispiel eines entsprechenden Verstärkungsteils,
- Fig. 10: eine Aufsicht auf das Verstärkungsteil aus Fig. 9,
- Fig. 11: einen Ausschnitt des Verstärkungsteils aus den Figuren 8 und 9 in einem eingebauten Zustand in einer Airbaganordnung,
- Fig. 12: eine Seitenansicht eines fünften Ausführungsbeispiels für ein entsprechendes Verstärkungsteil,
- Fig. 13: ein perspektivische Ansicht des Verstäärkungsteils aus Fig. 12 und
- Fig. 14: eine Einbausituation des Verstärkungsteils aus den Figuren 12 und 13 in einer Airbaganordnung.

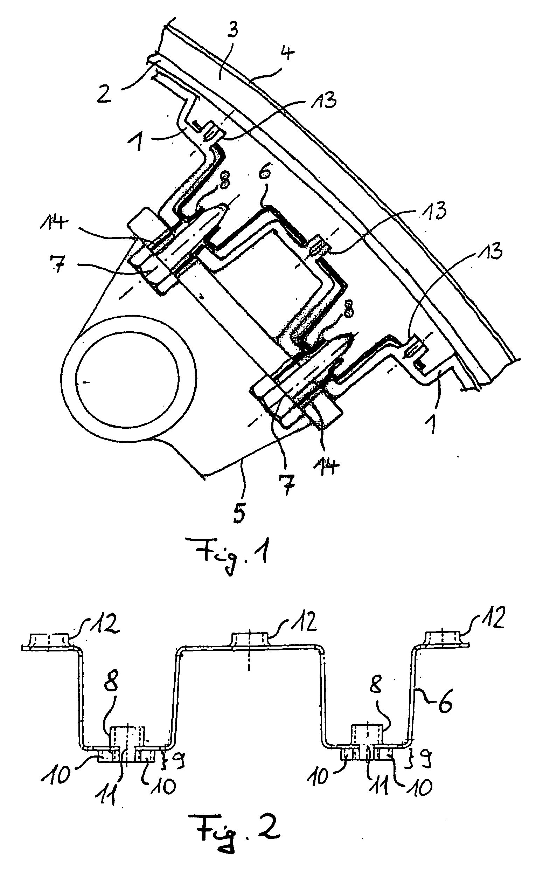

In Fig. 1 ist ein zumindest stellenweise flächig ausgeführter Träger 1 einer Airbagabdeckung zu erkennen. Auf diesem Träger ruht eine Airbagabdeckung, die eine Trägerschicht 2 und eine über der Trägerschicht 2 angeordnete und mit dieser durch eine Schaumschicht 3 verbundene Dekorschicht 4 aufweist. Der Träger 1, der aus Kunststoff gefertigt ist, sowie die Airbagabdeckung mit der Trägerschicht 2, der Schaumschicht 3 und der Dekorschicht 4 bilden ein Innenverkleidungsteil für ein Kraftfahrzeug, im vorliegenden Fall eine Instrumententafel.

An einer Rückseite des Trägers 1 ist ein Airbagmodul 5 angeordnet, das mittels einer Schraubverbindung an dem Träger 1 befestigt ist. Dabei umfasst die Schraubverbindung zwei Verstärkungsteile 6, die sich an einer in Fig. 1 nach oben rechts weisenden Vorderseite des Trägers 1 abstützen und von denen in der Schnittzeichnung der Fig. 1 nur eines zu erkennen ist. Eines der Verstärkungsteile 6, die baugleich ausgeführt sind, wird nachfolgend anhand der Figuren 2 bis 6 noch ausführlicher beschrieben.

Das Airbagmodul 5 ist durch jeweils zwei Löcher im Träger 1 mit jedem der Verstärkungsteile 6 verschraubt, wozu in jedes Verstärkungsteil 6 zwei Schrauben 7 eingeschraubt sind, die das Airbagmodul 5 halten. Eine durch die Schrauben 7 vermittelte Haltekraft wird dabei mittels der Verstärkungsteile 6 in den Träger 1 eingeleitet.

Das in den Figuren 2 bis 6 aus verschiedenen Ansichten gezeigte Verstärkungsteil 6 weist zwei mit jeweils einem Innengewinde versehene Durchzüge 8 auf, in die bei der Airbaganordnung aus Fig. 1 die Schrauben 7 eingeschraubt sind. In Umgebungen der Durchzüge 8 ist das das Verstärkungsteil 6 bildende Blech so in eine den Durchzügen 8 abgewandte Richtung umgebogen, dass zwei umgebogene Randbereiche 9 des Blechs jeweils eine durch den entsprechenden Durchzug 8 gebildete Öffnung an einer dem Durchzug 8 abgewandten Seite des Verstärkungsteils 6 zumindest teilweise einfassen. Dazu sind die Randbereiche 9 um 90° aus einer zum Durchzug 8 senkrechten Ebene herausgebogen.

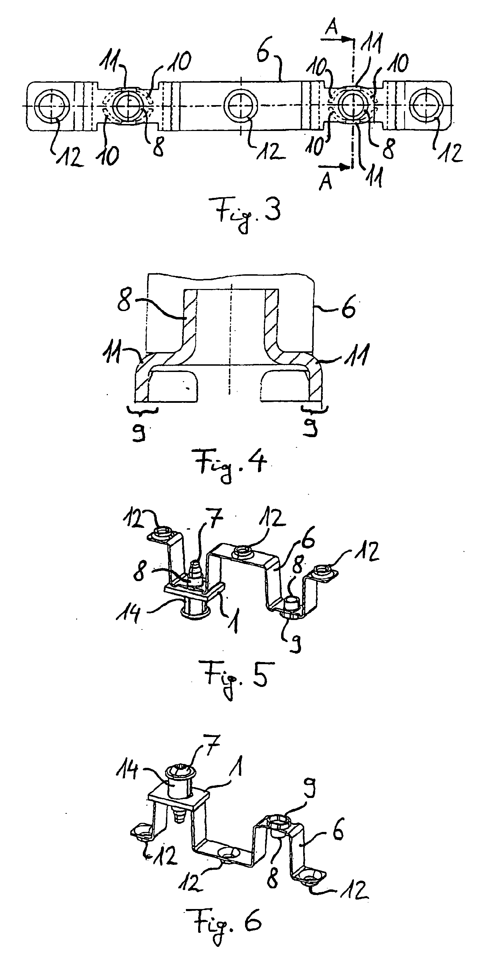

Die umgebogenen Randbereiche 9 umfassen jeweils einen Blechstreifen mit zwei Enden 10 sowie einen an diesem Blechstreifen ansetzenden und den Blechstreifen mit einem verbleibenden Teil des Blechs verbindenden umgebogenen Steg 11. Die zwei Enden 10 des Blechstreifens bilden mit dem Steg 11 eine T-Form. In Fig. 3 ist gut zu erkennen, dass die beiden Enden 10 jedes dieser Blechstreifen so umgebogen sind, dass sie die durch den entsprechenden Durchzug 8 gebildete Öffnung zumindest teilweise umfassen. Alternativ hierzu kann das Verstärkungsteil lediglich jeweils einen einem Durchzug zugeordnete Blechstreifen aufweisen, wobei die Enden des Blechstreifens derart umgebogen sind, dass die beiden Enden einander berühren oder fast berühren. Auch ein Umfassen eines Winkelbereichs von ca. 270° ist realisierbar.

Das Verstärkungsteil 6 ist selbst aus einem Streifen gebildet, der in seinem Verlauf so gebogen ist, dass er einem Oberflächenverlauf des Trägers 1 folgen kann. Die Verstärkungsteile 6 haben jeweils eine längste Ausdehnung von etwa 12 cm. Im Verlauf des Streifens, aus dem das Verstärkungsteil 6 gebildet ist, weist das Verstärkungsteil 6 im vorliegenden Ausführungsbeispiel zwei Durchzüge 8 auf, die in beschriebener Weise mit einem Innengewinde versehen und von den zwei umgebogenen Randbereichen 9 umgeben sind. Dabei sind jedem dieser Durchzüge 8 zwei der Randbereiche 9 des Blechs zugeordnet, wobei die Stege 11 dieser zwei Randbereiche 9 an zwei gegenüberliegenden Seiten des Durchzugs 8 am verbleibenden Teil des Blechs ansetzen, also jeweils an einem Rand des Streifens, der das Verstärkungsteil 6 bildet.

Zusätzlich weist das in den Figuren 2 bis 6 dargestellte Verstärkungsteil 6 drei weitere Durchzüge 12 auf, die kein Innengewinde aufweisen müssen und die bei der Airbaganordnung aus Fig. 1 lediglich zum genauen Positionieren des jeweiligen Verstärkungsteils 6 dienen. Dazu nehmen zwei dieser Durchzüge 12 dort jeweils einen an den Träger 1 angeformten Dorn 13 auf.

Die umgebogenen Randbereiche 9 der Verstärkungsteile 6 ragen bei der Airbaganordnung aus Fig. 1 in die mit den Durchzügen 8 fluchtenden Löcher im Träger 1 hinein, und zwar so, dass die Randbereiche 9 bis an eine dem Airbagmodul 5 zugewandte rückseitige Oberfläche des Trägers 1 heranreichen. Um zu veranschaulichen, wie das Airbagmodul 5 mittels der Verstärkungsteile 6 an dem Träger 1 befestigt ist, ist in den Figuren 5 und 6 jeweils ein Wandstück des Trägers 1 dargestellt, an dem sich das Verstärkungsteil 6 rückseitig abstützt. Erkennbar ist dort auch eine der Schrauben 7, die in den entsprechenden Durchzug 8 eingeschraubt ist, sowie eine Buchse 14, die einen Bestandteil des Airbagmoduls 5 bildet, durch die die Schraube 7 hindurchgeführt ist und die zumindest stellenweise an den Randbereichen 9 anliegt. Die Randbereiche 9, die wiederum jeweils innen an einer Wand des entsprechenden Lochs im Träger 1 anliegen, dienen so nicht nur zum Positionieren des entsprechenden Verstärkungsteils 6 am Träger 1, sondern auch als Abstandhalter, die eine durch die Schraubverbindung verursachte Druckbelastung auf den Träger 1 in Grenzen halten und eine feste Verschraubung des Verstärkungsteils 6 mit dem Airbagmodul 5 ohne Beschädigung des Trägers 1 erlauben.

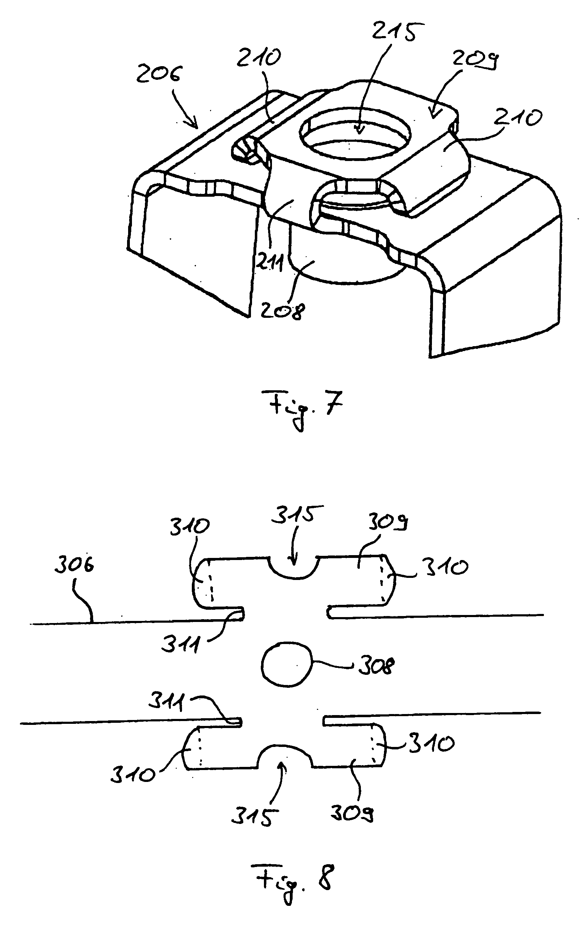

In der Fig. 7 ist eine alternative Ausführungsform dargestellt, wobei ein Teil eines Verstärkungsteils 206 zu erkennen ist. Der abgebildete Ausschnitt des Verstärkungsteils 206 zeigt einen Durchzug 208, welcher nach unten gerichtet ist und eine von oben nach unten verlaufende Achse aufweist. Das Verstärkungsteil 206 weist einen Randbereich 209 auf, wobei der Randbereich 209 zwei sich gegenüberliegende Endbereiche 210 aufweist. Der Randbereich 209 selbst ist über einen Steg 211 mit dem Verstärkungsteil 206 verbunden. In dem Randbereich 209 ist zudem eine Aussparung 215 angeordnet, die als Loch ausgeführt und derart angeordnet ist, dass eine durch den Durchzug 208 hindurchgreifende Schraube auch durch die Aussparung 215 reicht. Die Aussparung 215 fasst also den Durchzug 208 ein.

Der Randbereich 209 ist um 180° gegenüber dem Teil des Verstärkungsteil 206, an dem er ansetzt, umgebogen. Dabei dienen die Endbereiche 210, welche auf zwei gegenüberliegenden Seiten des Durchzugs 208 auf dem genannten Teil des Verstärkungsteils 206 aufliegen, zusammen mit dem Steg 211 als Abstandshalter, so dass zwischen dem umgebogenen Randbereich 209 und dem Eintritt in den Durchzug 208 ein Abstand definiert wird. Die Aussparung 215 kann im Vergleich zur Öffnung des Durchzugs 208 größer ausfallen und muss nicht kreisrund sein. Auch lediglich halb geschlossene ovale Formen oder viereckige Formen sind möglich.

Wie bei dem zuvor beschriebenen Ausführungsbeispiel weist das Verstärkungsteil 206 mehrere gleich gestaltete Durchzüge 208 mit korrespondierenden Randbereichen 209 auf. Es tritt, wie auch die nachfolgend beschriebenen weiteren Ausführungsbeispiele, bei Abwandlungen der in Fig. 1 gezeigten Airbaganordnung jeweils an die Stelle des Verstärkungsteils 6. Dann ragen die hier anders gestalteten Randbereich 209 in die mit den Durchzügen 208 fluchtenden Löcher im Träger 1 hinein und erfüllen die Funktion, die beim zuvor beschriebenen Ausführungsbeispiel den Randbereichen 9 zukommt.

In der Fig. 8 ist ein Verstärkungsteil 306 in einer weiteren Ausführungsform dargestellt, das jedes der Verstärkungsteile 6 aus Fig. 1 ersetzen kann. Das Verstärkungsteil 306 weist einen Durchzug 308 und zwei im noch nicht umgebogenen Zustand dargestellte Randbereiche 309 auf, welche beide jeweils über eine Aussparung 315 verfügen. Des Weiteren sind jeweils zwei Endbereiche 310 vorhanden, welche später nach dem Umbiegen des Randbereichs 309 ebenfalls um 90° umgebogen werden und neben dem Durchzug 308 zum Liegen kommen und den Randbereich 309 abstützen. Die sich gegenüberliegenden Randbereiche 309 kommen dabei so im Verhältnis zum Durchzug 308 zum Liegen, dass die beiden Aussparungen 315 sich im Wesentlichen zu einer aus zwei Halbkreisen bestehenden runden Aussparung ergänzen und den Durchzug 308 einfassen. Dabei müssen die beiden Randbereiche 309 jedoch nicht miteinander in Berührung treten.

Die Randbereiche 209 aus Fig. 7 sowie 309 aus Fig. 8, die jeweils die Funktion des Randbereichs 9 des ersten Ausführungsbeispiels übernehmen, werden jeweils um 180° umgebogen. Bei der Ausführung aus Fig. 8 können die Randbereiche 309 alternativ auch jeweils nur um 90° umgebogen werden und anschließend wie bei der Ausführungsform aus den Figuren 2 bis 6 angeordnet werden.

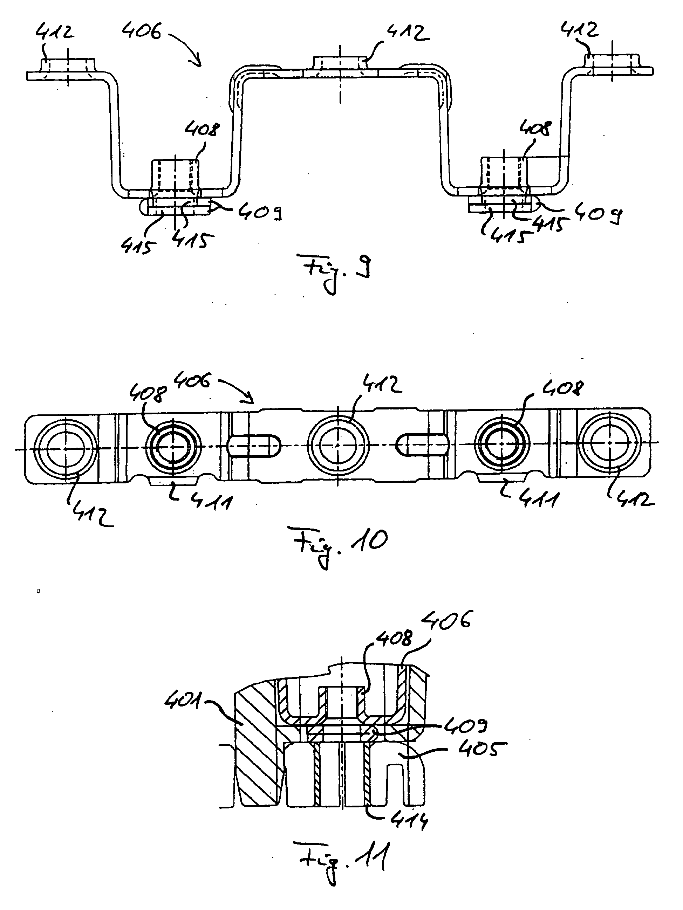

Die Figuren 9 und 10 zeigen ein Verstärkungsteil 406, das als Bestandteil einer Schraubverbindung zwischen einem Airbagmodul 405 und einem Träger 401 in einer entsprechenden Airbaganordnung jeweils an die Stelle der zuvor beschriebenen Verstärkungsteile 6, 206 und 306 treten kann. Eine typische Einbausituation des Verstärkungsteils 406 ist in Fig. 11 veranschaulicht, die einen Ausschnitt einer solchen Airbaganordnung zeigt und in der jeweils auch ein Teil des Airbagmoduls 405 und des Trägers 401 einer Airbagabdeckung zu erkennen ist.

Auch das Verstärkungsteil 406 weist zwei mit Innengewinden versehene Durchzüge 408 auf. In eingebautem Zustand fluchten diese Durchzüge 408 jeweils mit einem Loch im Träger 401 sowie mit einer in das Airbagmodul 405 eingesetzten Buchse 414 und nehmen eine nicht abgebildete Schraube zur Verbindung des Airbagmoduls 405 mit dem Träger 401 auf. Drei weitere Durchzüge 412 dienen, entsprechend den Durchzügen 12 der zuerst beschriebenen Ausführung, lediglich einer Positionierung des Verstärkungsteils 406. In unmittelbarer Umgebung jedes der beiden Durchzüge 408 weist auch das Verstärkungsteil 406 jeweils einen umgebogenen Randbereich 409 auf. Jeder dieser Randbereiche 409 weist einen Steg 411 auf, der um 180° umgebogen ist und ihn mit dem verbleibenden Teil des Verstärkungsteils 406 verbindet. Außerdem sind in jedem der beiden Randbereiche 409 zwei kreisförmige Aussparungen 415 vorgesehen, die durch einen weiteren Umbug des Randbereichs 409 übereinander liegen und mit dem entsprechenden Durchzug 408 fluchten. Der Randbereich 409 ist dadurch zweilagig und liegt in eingebautem Zustand, wie in Fig. 11 zu erkennen ist, in dem Loch, das im Träger 401 zur Aufnahme der Schraube vorgesehen ist, die das Airbagmodul 405 mit dem Träger 401 verbindet. Dort fungiert der Randbereich 409 wieder als Abstandshalter, an dem sich die Buchse 414 abstützen kann. Auch wenn die Schraube ausgesprochen fest angezogen wird, verhindert der in das Loch hineinragende Randbereich 409 dadurch eine Beschädigung des aus Kunststoff gefertigten Trägers 401.

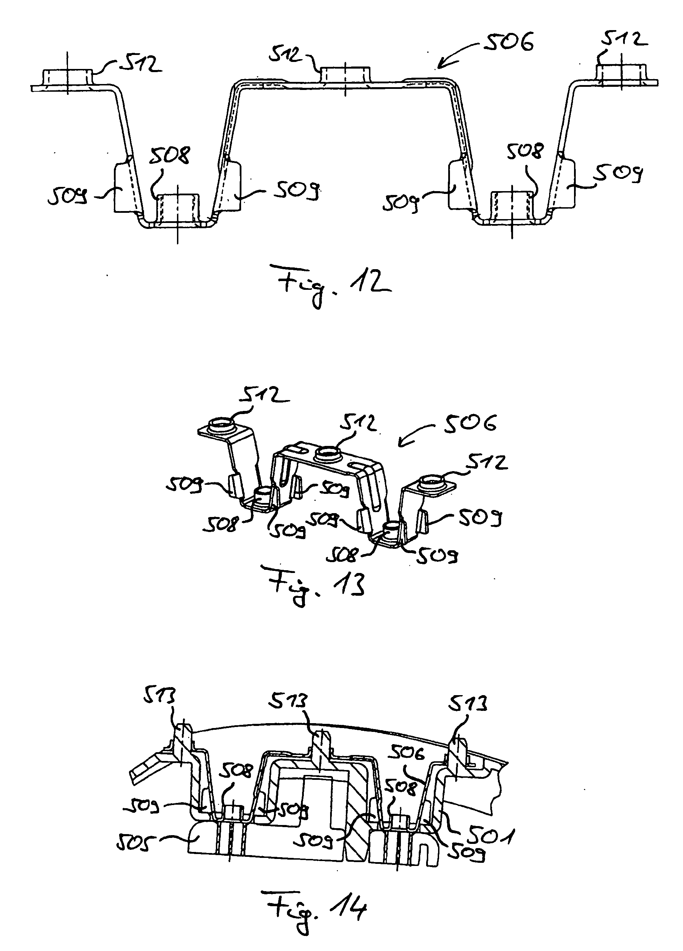

Ein letztes Ausführungsbeispiel ist in den Figuren 12 bis 14 gezeigt, wobei Fig. 12 eine Seitenansicht eines Verstärkungsteils 506, Fig. 13 eine perspektivische Ansicht dieses Verstärkungsteils 506 zeigt. Fig. 14 zeigt das als Teil einer Schraubverbindung zur Befestigung eines nur teilweise abgebildeten Airbagmoduls 505 an einem Träger 501 einer Airbagabdeckung dienende Verstärkungsteil 406 in eingebautem Zustand.

Das Verstärkungsteil 506 weist zwei mit Innengewinden versehene Durchzüge 508 auf. In eingebautem Zustand fluchten diese Durchzüge 508 jeweils mit einem Loch im Träger 501 sowie mit einer in das Airbagmodul 505 eingesetzten Buchse 514 und nehmen eine auch hier nicht abgebildete Schraube zur Verbindung des Airbagmoduls 505 mit dem Träger 401 auf. Drei weitere Durchzüge 512 dienen, entsprechend den Durchzügen 12 und 412 der zuvor beschriebenen Ausführungsbeispiele, einer Positionierung des Verstärkungsteils 406 und nehmen dazu jeweils einen Dorn 513 des Trägers 501 auf. Wie die zuvor beschriebenen Verstärkungsteils 6, 206, 306 und 406 ist auch das Verstärkungsteil 506 aus einem Stück Blech geformt.

In einer Umgebung jeder der beiden Durchzüge 508 weist das Verstärkungsteil 506 jeweils vier umgebogene Randbereiche 509 auf, die bei diesem Ausführungsbeispiel jedoch nicht als Abstandhalter in dem Loch im Träger 501 zu liegen kommen. Stattdessen stützt sich das Verstärkungsteil 506 in diesem Fall mit den umgebogenen Randbereichen 509 an der Rückseite des Trägers 1 ab, während andere Teile des Verstärkungsteils 506, die die Durchzüge 508 unmittelbar umgeben, in die mit den Durchzügen 508 fluchtenden Löche des Trägers 501 hineinragen und dabei als Abstandshalter bis an eine dem Airbagmodul 505 zugewandte Oberfläche des Trägers 501 heranreichen. Das Airbagmodul 505 liegt mit den Buchsen 514 an diesen in die Löcher im Träger 501 hineinragenden Teilen des Verstärkungsteils 506 an.

## Patentansprüche

1. Airbaganordnung, umfassend
- einen Träger (1; 401; 501) einer Airbagabdeckung,
- ein an einer Rückseite des Trägers (1; 401; 501) angeordnetes Airbagmodul (5, 405; 505), das an mindestens einer Stelle mittels einer Schraubverbindung an dem Träger (1; 401; 501) befestigt ist, sowie
- ein einstückig aus einem Blech geformtes, von der Schraubverbindung umfasstes Verstärkungsteil (6; 206; 306; 406; 506) mit mindestens einem Innengewinde zum Einschrauben einer Schraube (7) der Schraubverbindung, mit dem eine durch die Schraube (7) vermittelte Haltekraft in den Träger (1; 401; 501) einleitbar ist,
wobei sich das Verstärkungsteil (6; 206; 306; 406; 506) an einer Vorderseite des Trägers (1; 401; 501) abstützt und wobei das Airbagmodul (5; 405; 505) durch ein mit dem mindestens einen Innengewinde fluchtendes Loch im Träger (1; 401; 501) mit dem Verstärkungsteil (6; 206; 306; 406; 506) verschraubt ist,
**dadurch gekennzeichnet,**
**dass** das Verstärkungsteil mindestens einen Durchzug (8; 208; 308; 408; 508) aufweist, der mit dem mindestens einen Innengewinde versehen ist, wobei der mindestens eine Durchzug (8; 208; 308; 408; 508) vom Träger (1; 401; 501) weg weist und wobei das Blech in einer Umgebung des mindestens einen Durchzugs (8; 208; 308; 408; 508) so in eine dem Durchzug (8; 208; 308; 408; 508) abgewandte Richtung umgebogen ist, dass mindestens ein umgebogener Randbereich (9; 209; 309; 409) des Blechs die durch den Durchzug (8; 208; 308; 408; 508) gebildete Öffnung an einer dem Durchzug (8; 208; 308; 408; 508) abgewandten Seite des Verstärkungsteils (6; 206; 306; 406) zumindest teilweise einfasst, wobei ein durch den mindestens einen Randbereich (9; 209; 309; 409) gebildeter Teil des Verstärkungsteils (6; 206; 306; 406; 506), der die durch den mindestens einen Durchzug (8; 208; 308; 408; 508) gebildete Öffnung umgibt, in das mit diesem Durchzug (8; 208; 308; 408; 508) fluchtende Loch des Trägers (1; 401; 501) hineinragt.

2. Airbaganordnung nach Anspruch 1, **dadurch gekennzeichnet, dass** der in das Loch des Trägers (1; 401; 501) hineinragende Teil durch dieses Loch hindurchragt und zumindest bis an eine dem Airbagmodul (5; 405; 505) zugewandte Oberfläche des Trägers (1; 401; 501) heranreicht.

3. Airbaganordnung nach Anspruch 2, **dadurch gekennzeichnet, dass** das Airbagmodul (5; 405; 505) zumindest stellenweise an dem in das Loch des Trägers (1; 401; 501) hineinragenden Teil des Verstärkungsteils (6; 206; 306; 406; 506) anliegt.

4. Airbaganordnung nach einem der Ansprüche 1 bis 3, **dadurch gekennzeichnet, dass** der mindestens eine Randbereich (9; 209; 309; 409) um 90° oder 180° aus einer zum Durchzug (8; 208; 308; 408) senkrechten Ebene herausgebogen ist.

5. Airbaganordnung nach einem der Ansprüche 1 bis 4, **dadurch gekennzeichnet, dass** der mindestens eine umgebogene Randbereich (9; 209; 309; 409) einen Blechstreifen und einen an dem Blechstreifen ansetzenden und den Blechstreifen mit einem verbleibenden Teil des Blechs verbindenden umgebogenen Steg (11; 211; 311; 411) umfasst.

6. Airbaganordnung nach Anspruch 5, **dadurch gekennzeichnet, dass** der Blechstreifen so umgebogen ist, dass er die durch den entsprechenden Durchzug (8; 208; 308; 408) gebildete Öffnung zumindest teilweise umfasst.

7. Airbaganordnung nach einem der Ansprüche 5 oder 6, **dadurch gekennzeichnet, dass** der Blechstreifen zwei Enden (10) aufweist, die mit dem Steg (11) eine T-Form bilden, wobei beide Enden (10) so umgebogen sind, dass sie die durch den entsprechenden Durchzug (8) gebildete Öffnung zumindest teilweise umfassen.

8. Airbaganordnung nach Anspruch 5, **dadurch gekennzeichnet, dass** der Blechstreifen eine Aussparung (215; 315; 415) aufweist, wobei die Aussparung (215; 315; 415) die durch den Durchzug (208; 308; 304) gebildete Öffnung zumindest teilweise, vorzugsweise vollständig, umfasst.

9. Airbaganordnung nach Anspruch 8, **dadurch gekennzeichnet, dass** der Blechstreifen mindestens einen, vorzugsweise zwei, Endbereiche (210; 310) aufweist, wobei die Endbereiche (210; 310) um 90° aus einer zur Aussparung (215; 315) parallelen Ebene herausgebogen sind.

10. Airbaganordnung nach einem der Ansprüche 5 bis 9, **dadurch gekennzeichnet, dass** dem mindestens einen Durchzug (8; 308) zwei dieser Randbereiche (9; 309) zugeordnet sind, wobei die Stege (11; 311) dieser zwei Randbereiche (9; 309) an zwei einander gegenüberliegenden Seiten des Durchzugs (8; 308) am verbleibenden Teil des Blechs ansetzen.

11. Airbaganordnung nach einem der Ansprüche 1 bis 10, **dadurch gekennzeichnet, dass** das Verstärkungsteil (6; 206; 306; 406; 506) aus einem Streifen gebildet ist.

12. Airbaganordnung nach Anspruch 11, **dadurch gekennzeichnet, dass** das Verstärkungsteil (6; 206; 306; 406; 506) in einem Verlauf des Streifens mindestens zwei mit Innengewinde versehene und von jeweils mindestens einem umgebogenen Randbereich (9; 209; 309; 405; 509) umgebene Durchzüge (8; 208; 308; 408; 508) aufweist.

13. Airbaganordnung nach einem der Ansprüche 1 bis 12, **dadurch gekennzeichnet, dass** das Verstärkungsteil (6; 406; 506) mindestens einen weiteren Durchzug (12; 412; 512) mit oder ohne Innengewinde aufweist.

## Claims

1. An airbag arrangement, comprising
- a carrier (1; 401; 501) of an airbag covering,
- an airbag module (5; 405; 505) which is arranged at a rear side of the carrier (1; 401; 501) and which is fastened to the carrier (1; 401; 501) at at least one point by means of a screw connection, and
- a reinforcement part (6; 206; 306; 406; 506) formed in one piece from sheet metal, included by the screw connection and having at least one internal thread for screwing in a screw (7) of the screw connection, by which reinforcement part a holding force communicated by the screw (7) can be introduced into the carrier (1; 401; 501),
wherein the reinforcement part (6; 206; 306; 406; 506) is supported at a front side of the carrier (1; 401; 501) and wherein the airbag module (5; 405; 505) is screwed to the reinforcement part (6; 206; 306; 406; 506) through a hole in the carrier (1; 401; 501) which is aligned with the at least one internal thread,
**characterized in that**
the reinforcement part has at least one passage (8; 208; 308) 408; 508) which is provided with the at least one internal thread, with the at least one passage (8; 208; 308; 408; 508) facing away from the carrier (1; 401; 501); and with the sheet-metal being bent over in a direction remote from the passage (8; 208; 308; 408; 508) in the surroundings of the at least one passage (8; 208; 308; 408; 508) such that at least one bent-over marginal region (9; 209; 309; 409) of the sheet-metal at least partly encompasses the opening formed by the passage (8; 208; 308; 408; 508) at a side of the reinforcement part (6; 206; 306; 406) remote from the passage (8; 208; 308; 408; 508); with a part of the reinforcement part (6; 206; 306; 406; 506) which is formed by the at least one marginal region (9; 209; 309; 409) and which surrounds the opening formed by the at least one passage (8; 208; 308; 408; 508) projecting into the hole of the carrier (1; 401; 501) aligned with this passage (8; 208; 308; 408; 508).

2. An airbag arrangement in accordance with claim 1, **characterized in that** the part projecting into the hole of the carrier (1; 401; 501) projects through this hole and reaches at least up to a surface of the carrier (1; 401; 501) facing the airbag module (5; 405; 505)..

3. An airbag arrangement in accordance with claim 2, **characterized in that** the airbag module (5; 405; 505) contacts at least at points the part of the reinforcement part (6; 206; 306; 406; 506) projecting into the hole of the carrier (1; 401; 501).

4. An airbag arrangement in accordance with one of the claims 1 to 3, **characterized in that** the at least one marginal region (9; 209; 309; 409) is bent by 90° or 180° out of a plane perpendicular to the passage (8; 208; 308; 408).

5. An airbag arrangement in accordance with one of the claims 1 to 4, **characterized in that** the at least one bent-over marginal region (9; 209; 309; 409) includes a sheet-metal strip and a bent-over web (11; 211; 311; 411) which starts at the sheet-metal strip and connects the sheet-metal strip to a remaining part of the sheet-metal.

6. An airbag arrangement in accordance with claim 5, **characterized in that** the sheet-metal strip is bent over such that it at least partly encompasses the opening formed by the corresponding passage (8; 208; 308; 408).

7. An airbag arrangement in accordance with one of the claims 5 or 6, **characterized in that** the sheet-metal strip has two ends (10) which form a T-shape with the web (11), with both ends (10) being bent over such that they at least partly encompass the opening formed by the corresponding passage (8).

8. An airbag arrangement in accordance with claim 5, **characterized in that** the sheet-metal strip has a cut-out (215; 315; 415), with the cut-out (215; 315; 415) encompassing the opening formed by the passage (208; 308; 304) at least partly, preferably completely.

9. An airbag arrangement in accordance with claim 8, **characterized in that** the sheet-metal strip has at least one, preferably two end regions (210; 310), with the end regions (210; 310) being bent by 90° out of a plane parallel to the cut-out (215; 315).

10. An airbag arrangement in accordance with one of the claims 5 to 9, **characterized in that** two of these marginal regions (9; 309) are associated with the at least one passage (8; 308), with the webs (11; 311) of these two marginal regions (9; 309) starting at two mutually oppositely disposed sides of the passage (8; 308) at the remaining part of the sheet-metal.

11. An airbag arrangement in accordance with one of the claims 1 to 10 **characterized in that** the reinforcement part (6; 206; 306; 406; 506) is formed from a strip.

12. An airbag arrangement in accordance with claim 11, **characterized in that** the reinforcement part (6; 206; 306; 406; 506) has at least two passages (8; 208; 308; 408; 508) provided with an internal thread and surrounded by a respective at least one bent-over marginal region (9; 209; 309; 409; 509) in an extent of the strip.

13. An airbag arrangement in accordance with one of the claims 1 to 12, **characterized in that** the reinforcement part (6; 406; 506) has at least one further passage (12; 412; 512) with or without an internal thread.

## Revendications

1. Agencement de coussin gonflable de sécurité, comprenant
- un support (1 ; 401 ; 501) d'un cache de coussin gonflable,
- un module de coussin gonflable (5 ; 405 ; 505) disposé sur un côté arrière du support (1 ; 401 ; 501) et fixé en au moins un endroit sur le support (1 ; 401 ; 501) par un assemblage vissé, et
- une pièce de renforcement (6 ; 206 ; 306 ; 406 ; 506) formée d'une pièce en tôle et entourée par l'assemblage vissé, avec au moins un filetage intérieur destiné à recevoir une vis (7) de l'assemblage vissé et à communiquer au support (1 ; 401 ; 501) une force de maintien transmise par la vis (7),
dans lequel la pièce de renforcement (6 ; 206 ; 306 ; 406 ; 506) s'appuie sur un côté avant du support (1 ; 401 ; 501) et dans lequel le module de coussin gonflable (5 ; 405 ; 505) est vissé sur la pièce de renforcement (6 ; 206 ; 306 ; 406 ; 506) grâce à un trou dans le support (1 ; 401 ; 501) qui est aligné avec ledit au moins un filetage intérieur,
**caractérisé en ce que**,
la pièce de renforcement comporte au moins un passage (8 ; 208 ; 308 ; 408 ; 508) qui est doté d'au moins un filetage intérieur, dans lequel ledit au moins un passage (8 ; 208 ; 308 ; 408 ; 508) s'éloigne du support (1 ; 401 ; 501), dans lequel la tôle environnant ledit au moins un passage (8 ; 208 ; 308 ; 408 ; 508) est recourbée dans une direction opposée au passage (8 ; 208 ; 308 ; 408 ; 508) de telle manière qu'au moins une zone marginale recourbée (9 ; 209 ; 309 ; 409) de la tôle comprenne au moins partiellement l'ouverture formée par le passage (8 ; 208 ; 308 ; 408 ; 508) sur un côté de la pièce de renforcement (6 ; 206 ; 306 ; 406 ; 506) qui est opposé au passage (8 ; 208 ; 308 ; 408 ; 508) et dans lequel une partie de la pièce de renforcement (6 ; 206 ; 306 ; 406 ; 506) formée par ladite au moins une zone marginale (9 ; 209 ; 309 ; 409) et entourant l'ouverture formée par ledit au moins un passage (8 ; 208 ; 308 ; 408 ; 508) s'engage dans le trou du support (1 ; 401 ; 501) qui affleure avec ce passage (8 ; 208 ; 308 ; 408 ; 508).

2. Agencement de coussin gonflable de sécurité selon la revendication 1, **caractérisé en ce que** la pièce qui s'engage dans le trou du support (1 ; 401 ; 501) traverse ce trou et atteint au moins une surface du support (1 ; 401 ; 501) tournée vers le module de coussin gonflable (5 ; 405 ; 505).

3. Agencement de coussin gonflable de sécurité selon la revendication 2, **caractérisé en ce que** le module de coussin gonflable (5 ; 405 ; 505) repose au moins par endroits contre la partie de la pièce de renforcement (6 ; 206 ; 306 ; 406 ; 506) qui s'engage dans le trou du support (1 ; 401 ; 501).

4. Agencement de coussin gonflable de sécurité selon l'une des revendications 1 à 3, **caractérisé en ce que** ladite au moins une zone marginale (9 ; 209 ; 309 ; 409) est repliée sur 90 ° ou sur 180 ° par rapport à un plan perpendiculaire au passage (8 ; 208 ; 308 ; 408).

5. Agencement de coussin gonflable de sécurité selon l'une des revendications 1 à 4, **caractérisé en ce que** ladite au moins une zone marginale (9 ; 209 ; 309 ; 409) recourbée comprend une bande de tôle et une nervure (11 ; 211 ; 311 ; 411) recourbée qui prolonge la bande de tôle et qui relie la bande de tôle avec une partie restante de la tôle.

6. Agencement de coussin gonflable de sécurité selon la revendication 5, **caractérisé en ce que** la bande de tôle est recourbée de manière à entourer au moins partiellement l'ouverture formée par le passage (8 ; 208 ; 308 ; 408 ; 508) correspondant.

7. Agencement de coussin gonflable de sécurité selon l'une des revendications 5 ou 6, **caractérisé en ce que** la bande de tôle possède deux extrémités (10) qui forment avec la nervure (11) une forme en T, dans lequel les deux extrémités (10) sont recourbées de manière à entourer au moins partiellement l'ouverture formée par le passage (8) correspondant.

8. Agencement de coussin gonflable de sécurité selon la revendication 5, **caractérisé en ce que** la bande de tôle comporte une découpe (215 ; 315 ; 415), dans lequel la découpe (215 ; 315 ; 415) comprend au moins partiellement et de préférence totalement l'ouverture formée par le passage (208 ; 308 ; 304).

9. Agencement de coussin gonflable de sécurité selon la revendication 8, **caractérisé en ce que** la bande de tôle comporte au moins une zone d'extrémité et de préférence deux (210 ; 310), dans lequel les zones d'extrémité (210 ; 310) sont recourbées de 90 ° par rapport à un plan parallèle à la découpe (215 ; 315).

10. Agencement de coussin gonflable de sécurité selon l'une des revendications 5 à 9, **caractérisé en ce que** ledit au moins un passage (8 ; 308) est associé à deux de ces zones marginales (9 ; 309), dans lequel les nervures (11 ; 311) de ces deux zones marginales (9 ; 309) se rattachent à la partie restante de la tôle sur deux côtés opposés du passage (8 ; 308).

11. Agencement de coussin gonflable de sécurité selon l'une des revendications 1 à 10, **caractérisé en ce que** la pièce de renforcement (6 ; 206 ; 306 ; 406 ; 506) est formée à partir d'une bande.

12. Agencement de coussin gonflable de sécurité selon la revendication 11, **caractérisé en ce que** la pièce de renforcement (6 ; 206 ; 306 ; 406 ; 506) comporte sur une longueur de la bande au moins deux passages (8 ; 208 ; 308 ; 408 ; 508) dotés d'un filetage intérieur et entourés chacun par au moins une zone marginale (9 ; 209 ; 309 ; 405 ; 509) recourbée.

13. Agencement de coussin gonflable de sécurité selon l'une des revendications 1 à 12, **caractérisé en ce que** la pièce de renforcement (6 ; 406 ; 506) possède au moins un autre passage (12 ; 412 ; 512) avec ou sans filetage intérieur.
